# FASCICULE DE BREVET EUROPEEN

(11) **EP 1 115 349 B1**
(45) Date de publication et mention de la délivrance du brevet: **11.01.2006**
(21) Numéro de dépôt: 00956562.3
(22) Date de dépôt: 28.07.2000
(51) Int. Cl.: A61C 13/30

(54) **TENON DENTAIRE TRANSPARENT ET RADIO-OPAQUE**
TRANSPARENTER FÜR RÖNTGENSTRAHLEN UNDURCHLÄSSIGER ZAHNSTIFT
TRANSPARENT AND RADIO-OPAQUE RETENTION PIN

(30) Priorité: 30.07.1999 FR 9909900
(43) Date de publication de la demande: 18.07.2001
(73) Titulaire: R.T.D. - Recherches Techniques Dentaires, 38120 Saint Egrève (FR)
(72) Inventeur: CHU, Manh-Quynh, F-38120 Saint Egrève (FR); REYNAUD, Pierre-Luc, F-39410 Vaulnaveys le Haut (FR); REYNAUD, Marc, F-38240 Meylan (FR)
(74) Mandataire: Puiroux, Guy
(86) Numéro de dépôt international: PCT/FR2000/002183
(87) Numéro de publication internationale: WO 2001/008590

(56) Documents cités:
- WO-A-96/15759
- WO-A-96/26686
- WO-A-98/52486

## Description

La présente invention concerne un tenon dentaire en matériau composite du type apte à être fixé dans la racine d'une dent au moyen d'un adhésif photopolymérisable ainsi qu'un procédé de fabrication de celui-ci.

On sait que, dans l'art dentaire, on utilise, pour reconstituer des dents dépulpées, des tenons qui sont fixés dans le canal radiculaire de la dent et qui servent de support à une reconstitution externe de celle-ci. De façon générale de tels tenons sont constitués de divers métaux, et notamment d'acier inoxydable, ces métaux présentant l'inconvénient de donner souvent naissance à des phénomènes de corrosion. Par ailleurs, ces tenons, en raison notamment de la grande différence existant entre leur module d'élasticité transversal et celui de la dentine dans laquelle ils sont implantés, ont tendance dans le temps à se désolidariser de cette dernière.

Afin de remédier à ces divers inconvénients on a proposé de réaliser les tenons dentaires en une matière composite, c'est-à-dire une matière essentiellement constituée de fibres synthétiques noyées dans une résine de synthèse et notamment une résine époxy. Afin de conférer à cette matière composite les qualités de résistance mécanique qui lui sont nécessaires pour soutenir les efforts de mastication qui s'exercent sur le tenon, notamment dans le sens longitudinal, on a fait appel à des fibres de haute résistance, telles que des fibres de carbone, dont l'axe est disposé parallèlement à celui du tenon et qui s'étendent de façon équitendue sur toute la longueur de celui-ci. On fait par ailleurs en sorte que ces tenons présentent un module d'élasticité dans le sens transversal qui soit voisin de celui de la dentine afin de respecter celle-ci lorsque des efforts transversaux sont exercés sur ces tenons, notamment en cours de mastication.

Les tenons de ce type, s'ils sont tout à fait satisfaisants en ce qui concerne la résistance aux différentes contraintes mécaniques, présentent l'inconvénient de se révéler transparents aux rayons X, ce qui empêche leur localisation facile par le praticien.

On a proposé, dans l'état antérieur de la technique, divers moyens permettant d'assurer l'opacité aux rayons X de ces tenons.

On sait par ailleurs que la fixation des tenons dentaires dans le canal radiculaire d'une dent peut être effectuée au moyen d'adhésifs photopolymérisables, c'est-à-dire de monomères synthétiques dont la réaction de polymérisation est provoquée par un rayonnement lumineux dont la longueur d'onde se situe dans le domaine visible. De tels adhésifs sont particulièrement intéressants dans la technique dentaire, dans la mesure où ils permettent au praticien d'activer la réaction de polymérisation rigoureusement à l'instant où il le souhaite. Cependant de tels adhésifs photopolymérisables sont, la plupart du temps, difficiles à mettre en oeuvre dans la mesure où l'éclairement du fond du canal radiculaire est particulièrement difficile à effectuer de façon suffisante pour être efficace.

C'est pourquoi on a proposé de faire appel à des barreaux constitués d'une matière transparente, qui sont aptes à véhiculer le rayonnement lumineux nécessaire au déclenchement de la réaction de polymérisation de l'adhésif.

On a cependant constaté que de tels tenons, s'ils assuraient une bonne polymérisation, possédaient par ailleurs des caractéristiques mécaniques généralement trop faibles qui les rendaient inadaptés à l'utilisation souhaitée.

On connaît par la demande WO 9615759 un profilé en matériau composite destiné à constituer un élément prothétique, et notamment un tenon dentaire, comportant une âme constituée de fibres longitudinales qui est noyée dans une matrice de résine, cette matrice de résine contenant au moins un oxyde métallique. Suivant cette demande, les oxydes métalliques destinés à conférer à l'élément prothétique des qualités d'opacité aux rayons X peuvent également être disposés dans les fibres.

La présente invention a pour but de proposer un tenon dentaire en matériau composite qui possède à la fois les trois caractéristiques idéales d'un tenon dentaire à savoir des caractéristiques mécaniques lui permettant d'assurer sa fonction propre, une transparence en lumière visible permettant le passage des radiations lumineuses nécessaires à la mise en oeuvre de la réaction de polymérisation de l'adhésif, et une opacité en ce qui concerne la propagation des rayons X.

La présente invention a ainsi pour objet un tenon dentaire en matériau composite du type comprenant une âme formée de fibres noyées dans une matrice de résine, dans lequel ces fibres qui possèdent un indice de réfraction sont radio-opaques, caractérisé en ce que l'écart entre l'indice de réfraction des fibres et celui de la résine est inférieur à 0,15.

Préférentiellement la proportion de fibres dans le tenon sera inférieure à 70% en volume.

Dans un mode de mise en oeuvre de l'invention on ajustera l'indice de réfraction de la résine utilisée par rapport à l'indice de réfraction des fibres. Ainsi, dans le cas où l'indice de réfraction de la résine est trop faible par rapport à celui des fibres, on augmentera cet indice par adjonction de charges telles que par exemple de la silice amorphe ou d'autres composés tels que certains oxydes et notamment des oxydes métalliques. Dans le cas où l'indice de réfraction de la résine est trop élevé, il sera alors possible de diminuer celui-ci par dilution de la résine de synthèse dans un solvant.

On pourra également ajuster l'indice de réfraction de la résine par rapport à celui des fibres en mélangeant deux résines différentes, compatibles entre elles, et possédant des indices de réfraction relativement éloignés, ce qui permettra d'obtenir, par mélange, un indice de réfraction spécifique souhaité compris entre les limites extrêmes de ces deux résines. Préférablement l'une au moins de ces résines aura un indice de réfraction supérieur à celui des fibres.

La présente invention a également pour objet un procédé de réalisation d'un tenon dentaire du type comportant une âme de fibres radio-opaques s'étendant d'une extrémité à l'autre du tenon et qui sont noyées dans une matrice de résine, caractérisé en ce qu'il comporte les étapes consistant à :
- utiliser une quantité de fibres minimale apte à conférer au tenon d'une première part les caractéristiques mécaniques et de seconde part le degré de radio-opacité souhaité,
- utiliser une résine pour constituer la matrice, dont l'écart de son indice de réfraction avec celui des fibres est inférieur à 0,15.

On décrira ci-après, à titre d'exemples non limitatifs, diverses formes d'exécution de la présente invention.

### EXEMPLE 1

Dans un premier mode de mise en oeuvre de l'invention on a réalisé des tenons dentaires à partir de fibres synthétiques dites de type AR (en langue anglaise "alcali résistant") qui sont des fibres utilisées dans le domaine du bâtiment, en raison de leur bonne résistance chimique à long terme aux attaques acides et alcalines. Cette bonne résistance leur est conférée par le dioxyde de zirconium qu'elles contiennent à raison de 16%. On a constaté que le dioxyde de zirconium confère également à ces fibres la particularité de les rendre radio-opaques lorsqu'elles sont éclairées par un faisceau de rayons X. Leur indice de réfraction est de 1,562 lorsqu'elles sont éclairées par une radiation correspondant à la raie du sodium. A l'aide de ces fibres, on a constitué un jonc composite en utilisant une résine constituée de 55% en poids d'une résine époxy modifiée et de 45% en poids d'un solvant/diluant dont l'indice de réfraction est de 1,546 (Domaine du visible à 20°C). Dans ce jonc les fibres ont été disposées de façon orientée dans le sens longitudinal et de façon continue sur toute la longueur du jonc. Un tel jonc comprenait 64% en volume de fibres et 36% en volume de résine. Ce jonc a ensuite été découpé de façon à former des tenons dentaires d'environ 20 mm de longueur.

On a ensuite testé ces tenons, aussi bien en ce qui concerne leur opacité aux rayons X qu'yen ce qui concerne leur transparence, c'est-à-dire leur capacité de transmettre de l'amont vers l'aval, l'énergie lumineuse nécessaire à la polymérisation d'un adhésif.

On a ainsi soumis une dent pourvue d'un tel tenon à un rayonnement fourni par un appareil de radiologie du type habituellement utilisé dans un cabinet dentaire (75kV, exposition 0,06) et l'on a constaté qu'un tel tenon se distinguait parfaitement sur les épreuves obtenues.

On a ensuite disposé, en extrémité de ce tenon, un adhésif de type photopolymérisable et, autour de sa partie amont, un masque opaque, de façon à n'éclairer avec un appareil approprié, que l'extrémité amont de ce tenon. On a ainsi éclairé cette extrémité pendant une durée de 40 secondes et l'on a constaté que l'adhésif se trouvait totalement polymérisé.

Quant aux propriétés mécaniques des tenons dentaires ainsi obtenues, on a mesuré les valeurs suivantes :
- Contrainte de rupture à la flexion : 1570 MPa
- Module d'élasticité en traction longitudinale : 47 GPa
- Module d'élasticité en flexion : 49 GPa
- Contrainte de cisaillement interlaminaire : 66 MPa

On constate ainsi que ces propriétés garantissent la grande qualité mécanique de ces tenons.

### EXEMPLE 2

On a réalisé des tenons à partir de constituants de base identiques aux précédents, en modifiant seulement les proportions de fibres et de résine, et l'on a ainsi utilisé 43% en volume de fibres et 57% en volume de résine.

Les tests qui ont été effectués sur ces tenons ont démontré que leur mise en oeuvre était plus aisée en raison de la meilleure fluidité du produit. On a également constaté que leur transparence était très améliorée par rapport à celle obtenue sur les tenons précédents. Par ailleurs, on a constaté que ces tenons avaient une bonne résistance aux solvants.

Les propriétés mécaniques sont en légère diminution par rapport aux valeurs précédentes, mais restent cependant très satisfaisantes pour les applications souhaitées :
- Contrainte de rupture à la flexion : 972 MPa
- Module d'élasticité en traction longitudinale : 33 GPa
- Module d'élasticité en flexion : 40 GPa
- Contrainte de cisaillement interlaminaire : 54 MPa

### EXEMPLE 3

L'une des difficultés de mise en oeuvre de la présente invention réside dans le fait de disposer de fibres et d'une résine qui aient des indices de réfraction très voisins. Dans le présent mode de mise en oeuvre on a utilisé deux résines de base que l'on a mélangées, l'une de ces résines ayant un indice de réfraction supérieur à celui désiré et l'autre ayant un indice de réfraction inférieur.

On a ainsi utilisé une résine constituée de première part de 45% en poids d'une résine Bisgma dont l'indice de réfraction, mesuré dans le domaine du visible à 25°C, est de 1,550, de seconde part de 45% en poids d'une résine triéthylène glycol diméthacrylate dont l'indice de réfraction, mesuré dans le domaine du visible à 20°C, est de 1,460 et de troisième part de 10% de silice colloïdale.

On a obtenu une résine dont l'indice de réfraction est de 1,510. Une telle résine pourra avantageusement être utilisée avec des fibres dont l'indice de réfraction sera voisin d'une telle valeur.

Par ailleurs on a constaté que l'ajout de silice avait pour effet d'une part de conférer à la résine ou au mélange de résine, un caractère thixotropique, ce qui facilite l'opération d'élaboration du tenon, notamment l'opération de pultrusion ou de moulage, et d'autre part d'augmenter faiblement la valeur de l'indice de réfraction, ce qui permet d'ajuster de façon précise la valeur de celui-ci par rapport à l'indice de réfraction des fibres que l'on souhaite utiliser.

### EXEMPLE 4

Dans ce mode de mise en oeuvre de l'invention on a réalisé des tenons dentaires en conservant le même type de fibres et en utilisant une résine polyester. Cette résine une fois associée à son diluant avait un indice de réfraction de 1,546 (Domaine du visible à 20°C). Comme précédemment les fibres ont été disposées de façon orientée dans le sens longitudinal et de façon continue sur toute la longueur d'un jonc, et l'on a utilisé 64% en volume de fibres pour 36% en volume de résine. Ce jonc a ensuite été découpé de façon à former des tenons dentaires d'environ 20 mm de longueur.

Les tests ont montré une bonne opacité de ces tenons aux rayons X et une bonne transparence, c'est-à-dire une bonne capacité à transmettre de l'amont vers l'aval, l'énergie lumineuse nécessaire à la polymérisation d'un adhésif photopolymérisable.

Quant aux propriétés mécaniques des tenons dentaires ainsi obtenus, on a mesuré les valeurs suivantes :
- Contrainte de rupture à la flexion : 1476 MPa
- Module d'élasticité en traction longitudinale : 41 GPa
- Module d'élasticité en flexion : 49 GPa
- Contrainte de cisaillement interlaminaire : 68 MPa

On a constaté ainsi que ces valeurs montrent la bonne qualité mécanique de ces tenons.

### EXEMPLE 5

Dans ce mode de mise en oeuvre de l'invention on a réalisé des tenons dentaires en conservant le même type de fibres et en utilisant une résine époxy du type Bisphénol A associée à un diluant constitué lui-même d'une résine méthacrylate dont l'indice de réfraction était de 1,539 (Domaine du visible à 25°C). Cette résine une fois associée à son diluant avait un indice de réfraction de 1,556 (Domaine du visible à 20°C). Comme dans les exemples précédents les fibres ont été disposées de façon orientée dans le sens longitudinal et de façon continue sur toute la longueur d'un jonc et l'on a utilisé 60% en volume de fibres pour 40% en volume de résine. Ce jonc a ensuite été découpé de façon à former des tenons dentaires d'environ 20 mm de longueur.

Les tests ont montré une bonne opacité de ces tenons aux rayons X et une bonne transparence.

Les valeurs mesurées de leurs propriétés mécaniques qui étaient les suivantes :
- Contrainte de rupture à la flexion : 1468 MPa
- Module d'élasticité en traction longitudinale : 45 GPa
- Module d'élasticité en flexion : 49 GPa
- Contrainte de cisaillement interlaminaire : 64 MPa montrent l'excellente qualité mécanique de ces tenons.

## Revendications

1. Tenon dentaire en matériau composite du type comprenant une âme formée de fibres noyées dans une matrice de résine, dans lequel ces fibres qui possèdent un indice de réfraction (n) sont radio-opaques, **caractérisé en ce que** l'écart entre l'indice de réfraction (n) des fibres et celui (n') de la résine est inférieur à 0,15.

2. Tenon dentaire suivant la revendication 1 **caractérisé en ce que** la proportion de fibres dans le tenon est inférieure à 70% en volume.

3. Tenon dentaire suivant l'une des revendications 1 ou 2 **caractérisé en ce que** la matrice est constituée d'un mélange d'au moins deux résines.

4. Tenon dentaire suivant la revendication 3 **caractérisé en ce que** l'une au moins des deux résines a un indice de réfraction supérieur à celui des fibres.

5. Tenon dentaire suivant la revendication 1 **caractérisé en ce que** la matrice est constituée d'au moins une résine additionnée d'un solvant.

6. Tenon dentaire suivant la revendication 5 **caractérisé en ce que** le solvant est constitué d'une résine.

7. Tenon dentaire suivant l'une des revendications précédentes **caractérisé en ce que** la matrice comporte des charges, notamment de silice amorphe, ou d'oxydes métalliques.

8. Procédé de réalisation d'un tenon dentaire du type comportant une âme de fibres radio-opaques s'étendant d'une extrémité à l'autre du tenon et qui sont noyées dans une matrice de résine, **caractérisé en ce qu'**il comporte les étapes consistant à :
- utiliser une quantité de fibres minimale apte à conférer au tenon d'une première part les caractéristiques mécaniques et de seconde part le degré de radio-opacité souhaité,
- utiliser une résine pour constituer la matrice, dont l'écart de son indice de réfraction avec celui des fibres est inférieur à 0,15.

9. Procédé suivant la revendication 8 **caractérisé en ce que** l'on ajuste l'indice de réfraction de la résine par le mélange de résines d'indices de réfraction différents.

10. Procédé suivant la revendication 8 ou 9 **caractérisé en ce que** l'on ajuste l'indice de réfraction de la résine par l'adjonction de charges, notamment de silice amorphe ou d'oxydes métalliques.

## Claims

1. Dental retention pin made of composite material, of the type comprising a core formed by fibres embedded in a resin matrix, in which these fibres which present a refraction index (n) are radio-opaque, **characterized in that** the difference between the refraction index (n) of the fibres and that (n') of the resin is less than 0.15.

2. Dental retention pin according to Claim 1, **characterized in that** the proportion of fibres in the pin is less than 70% by volume.

3. Dental retention pin according to one of Claims 1 or 2, **characterized in that** the matrix is constituted by a mixture of at least two resins.

4. Dental retention pin according to Claim 3, **characterized in that** at least one of the two resins has a refraction index higher than that of the fibres.

5. Dental retention pin according to Claim 1, **characterized in that** the matrix is constituted by at least one resin to which a solvent is added.

6. Dental retention pin according to Claim 5, **characterized in that** the solvent is constituted by a resin.

7. Dental retention pin according to one of the preceding Claims, **characterized in that** the matrix comprises fillers, in particular amorphous silica, or metal oxides.

8. Process for making a dental retention pin of the type comprising a core of radio-opaque fibres extending from one end of the pin to the other, and which are embedded in a matrix of resin, **characterized in that** it comprises the steps consisting in:
- using a minimum quantity of fibres adapted to give the retention pin, on the one hand, the mechanical characteristics and, on the other hand, the desired degree of radio-opacity,
- using a resin for constituting the matrix, of which the difference of its refraction index with respect to that of the fibres is less than 0.15.

9. Process according to Claim 8, **characterized in that** the refraction index of the resin is adjusted by the mixture of resins of different refraction indices.

10. Process according to Claim 8 or 9, **characterized in that** the refraction index of the resin is adjusted by the addition of fillers, in particular amorphous silica or metal oxides.

## Patentansprüche

1. Zahnstift aus einem Kompositmaterial des Typs, welcher einen Kern aufweist, der aus Fasern gebildet ist, die in eine Harzmatrix eingebettet sind, wobei diese Fasern, die einen Brechungsindex (n) haben, für Röntgenstrahlen undurchlässig sind, **dadurch gekennzeichnet, dass** der Unterschied zwischen dem Brechungsindex (n) der Fasern und dem Brechungsindex (n') des Harzes weniger als 0,15 beträgt.

2. Zahnstift nach Anspruch 1, **dadurch gekennzeichnet, dass** der Volumenanteil der Fasern im Zahnstift weniger als 70 % beträgt.

3. Zahnstift nach einem der Ansprüche 1 oder 2, **dadurch gekennzeichnet, dass** die Matrix aus einem Gemisch von mindestens zwei Harzen besteht.

4. Zahnstift nach Anspruch 3, **dadurch gekennzeichnet, dass** mindestens eines der Harze einen Brechungsindex hat, der höher als der Brechungsindex der Fasern ist.

5. Zahnstift nach Anspruch 1, **dadurch gekennzeichnet, dass** die Matrix aus mindestens einem Harz besteht, dem ein Lösungsmittel zugesetzt ist.

6. Zahnstift nach Anspruch 5, **dadurch gekennzeichnet, dass** das Lösungsmittel aus einem Harz besteht

7. Zahnstift nach einem der vorhergehenden Ansprüche, **dadurch gekennzeichnet, dass** die Matrix Füllstoffe, insbesondere amorphes Silica oder Metalloxide beinhaltet.

8. Verfahren zur Herstellung eines Zahnstiftes des Typs, der einen Kern aus für Röntgenstrahlung undurchlässigen Fasern aufweist, die sich von einem Ende des Zahnstiftes zum anderen erstrecken und die in eine Harzmatrix eingebettet sind, **dadurch gekennzeichnet, dass** es folgende Schritte aufweist:
- Verwenden einer minimalen Fasermenge, die geeignet ist, dem Zahnstift einesteils die mechanischen Eigenschaften und anderenteils den gewünschten Grad an Undurchlässigkeit gegenüber Röntgenstrahlen zu verleihen,
- Verwenden eines Harzes zur Bildung der Matrix, wobei der Unterschied von dessen Brechungsindex zum Brechungsindex der Fasern weniger als 0,15 beträgt.

9. Verfahren nach Anspruch 8, **dadurch gekennzeichnet, dass** der Brechungsindex des Harzes durch Mischen von Harzen unterschiedlicher Brechungsindizes eingestellt wird.

10. Verfahren nach Anspruch 8 oder 9, **dadurch gekennzeichnet, dass** der Brechungsindex des Harzes durch Zusetzen von Füllstoffen, insbesondere von amorphem Silica oder Metalloxiden eingestellt wird.
